# EUROPEAN PATENT SPECIFICATION

(11) **EP 0 932 999 B1**
(45) Date of publication and mention of the grant of the patent: **14.07.2004**
(21) Application number: 97943265.5
(22) Date of filing: 23.09.1997
(51) Int. Cl.: H04Q 7/38

(54) **DEVICE AND METHOD IN A CELLULAR MOBILE TELEPHONE SYSTEM**
EINRICHTUNG UND VERFAHREN FÜR ZELLULARES MOBILES TELEFONSYSTEM
DISPOSITIF ET PROCEDE A UTILISER DANS UN SYSTEME TELEPHONIQUE MOBILE CELLULAIRE

(30) Priority: 30.09.1996 SE 9603561
(43) Date of publication of application: 04.08.1999
(73) Proprietor: Telefonaktiebolaget LM Ericsson (publ), 164 83 Stockholm (SE)
(72) Inventor: BODIN, Stig, Roland, S-163 59 Spanga (SE)
(74) Representative: Sjöberg, Mats Hakan
(86) International application number: PCT/SE1997/001598
(87) International publication number: WO 1998/015150

(56) References cited:
- EP-A- 0 631 453
- WO-A-92/05672
- WO-A-96/25830

## Description

### FIELD OF INVENTION

The present invention relates to a method and to an apparatus for determining the geographical position of a mobile station in a TDMA-type mobile telephony system, and then particularly a system of the kind that uses GSM standards.

### DESCRIPTION OF THE BACKGROUND ART

Several methods for determining the position of a mobile station in a cellular land-based mobile radio system are known to the art.

PCT 96/00274 describes one such method for determining the position of a mobile station. The position of the mobile station is determined with the aid of triangulation subsequent to measuring and recording propagation delays and signal strengths between the mobile station and neighbouring base stations. A traffic connection is first established with the mobile station over a first base station and the signal strength and the propagation delay are measured in respect of this connection. In order to be able to measure the propagation delay and the signal strength between said mobile station and a second base station, it is necessary to handover the radio connection so as to maintain said connection via the second base station. When measuring signal strength and propagation delay in respect of further base stations, it is necessary to effect a new handover. Upon completion of the measurement run, the radio connection is again switched to the original base station. It will be noted that a complete handover takes place to each base station, i.e. that also the traffic connection is effected over the new base station. This means that the connection will be setup over a non-optimal base station. The radio connection is setup over channels which are not intended for use in the cell in which the mobile station is located, a circumstance which is liable to having a disturbing affect on other traffic in the mobile radio system and also to impair the quality of the established connection.

Wo 92/05672 describes a similar method for determining the position of a mobile station by handing over the mobile station to a number of neighbour base stations and determining the position from the propagation delays measured during the handover procedures.

SE-B-466 376 teaches another method for determining the position of a mobile station in a GSM-type mobile telephone system. In this case, it is also possible to determine the position of the mobile station even when the system base stations are not synchronized. A base station measures the time delay upon the arrival of an access signal sent by the mobile station in relation to the expected time arrival of the signal in the event of the mobile station being located in the same-place as the base station. The access signal is sent by the mobile station over the random access channel RACH common to a radio base station. This channel is used when the mobile station is in an idle mode. The measuring procedure is repeated at several base stations, wherein three measurement values are required for determining the position of the mobile station.

The mobile station designates the base stations to which an access signal is sent. According to one embodiment, the time delays measured in the base stations are sent back to the mobile station in the form of so-called time-alignment values (TA). The mobile station receives a TA from each designated base station and forwards the TA value together with the identity of the base station to a localizing unit, in which the position of the mobile station is determined. It is necessary to modify the mobile station in order to transmit these data. It is also necessary to modify the base station in order to be able to designate several base stations to which access is initiated.

In a further embodiment, the base stations send the measured time delays to the localizing unit.

Position finding is also described in Swedish Patent Application SE 96005772. This document describes how the position of a mobile station in a TDMA-type mobile radio system can be determined by measuring the propagation delay between the mobile station and at least three radio base stations. The mobile station measures the difference in arrival times between signal bursts transmitted from the various base stations. One problem is that the radio base stations are not synchronized time-wise, meaning that their internal signal burst transmission schedules are displaced in time. In order for the propagation delay to be known, it is necessary to know the time at which a signal is transmitted and the time at which this signal is received by the mobile station. In order to establish the transmission time point, there is used a reference mobile whose position is known and therewith also the propagation delay of signals from neighbouring base stations. The reference mobile also measures the time difference between signal bursts from different base stations. The time differences measured in the reference mobile and in the mobile whose position is to be determined are sent to an evaluating mode which calculates the time displacements between the base stations. Subsequent calculation of the propagation delays between the radio base stations and the mobile, and therewith calculation of the position of the mobile, can be effected either in the evaluation node or in the mobile station.

### SUMMARY OF THE INVENTION

The present invention attacks a problem concerned with how the geographic position of a mobile station in a GSM-type mobile telephone system can be determined.

A further problem is that measuring of the radio connection necessary to determine position of a mobile violates the system frequency plan and therewith increases radio frequency interference in the system.

Another problem with known methods is that the quality of an established speech connection is impaired by the signalling necessary to determine the position of a mobile.

Still another problem resides in the high costs incurred when it is necessary for the user to replace its mobile station with a new modified station in order to avail itself of the position finding function.

Yet another problem is one of being able to determine the position of a mobile station in an existing mobile telephone system and, at the same time, be able to avoid synchronization between base stations with regard to signal burst transmissions.

Another problem is one of achieving a high degree of precision in determining the position of a mobile station.

Accordingly, one object of the present invention is to enable the position of a mobile station in a mobile radio system to be determined with non-synchronized radio base stations without requiring modification to the mobile station, using generally existing functions in the land-placed part of the system to this end, and limiting the additional radio frequency interference with respect to its own radio traffic and neighbouring radio traffic caused by the position determining process.

A traffic connection is set up in the event that no traffic connection has been initially established with the mobile station whose position is to be determined. In accordance with the proposed method, the mobile station is ordered to handover to a new base station. The mobile station therewith sends access signals to the new base station. The new base station determines the time delay at the arrival of the access signal as with a typical handover. The time delay is a measurement of the propagation delay between the mobile station and the new base station. Distinct from normal handover, all signalling from the new base station to the mobile station is inhibited, and the mobile station thus receives no confirmation regarding transmitted access signals. The mobile station then reestablishes the connection with the old base station in accordance with standard unsuccessful handover procedure. The described measuring procedure is repeated at one or more base stations. The result of the measuring procedure is used to determine the position of the mobile station.

In a preferred embodiment, a service node obtains access to those time delays that have been measured at at least three base stations. The service node is able to determine the position of the mobile station with knowledge of the positions of the base stations and with knowledge of the aforesaid time delays on the basis of earlier known computing methods. If access is available to solely two time delays, it is still possible to determine the position of the mobile station although with a certain degree of uncertainty.

When determining the position of a mobile, it is also possible to utilize a time delay that has been obtained with earlier known measuring methods, e.g. in the base station that serves the mobile station during a connection setup.

The position determining method is characterized by the features set forth in the characterizing clause of Claim 1. Apparatus for carrying out the method is characterized by the features set forth in the characterizing clause of Claim 7.

Subsequent to establishing a traffic connection with the mobile station, the base station controller is given access to a list of received signal strengths from base stations neighbouring on the connected radio base station and compiled by the mobile station. Those base stations that are to make measurements for determining the position of the mobile station are chosen from this list by the land-based part of the system.

The mobile station records a time reference for each of the base stations included on the list. The mobile station measures the time reference, by listening on the synchronization channel (SCH) and frequency correction channel (FCCH) belonging to each base station.

The recorded time reference is used when the mobile station is ordered to effect handover to a new base station chosen from the list compiled by the mobile station. The time reference is used to send the access signal to the new base station at the correct time. Despite this, the access signal will arrive at the new base station delayed in relation to the correct time position, as a result of wave propagation delay. The new base station records this time delay in relation to the correct time position.

The recorded time delay corresponds to the wave propagation time of a signal reciprocating between the new base station and the mobile station.

The inventive method constitutes an improvement of earlier known methods where complete handover of a radio connection is made to enable the position of a mobile to be determined.

When the inventive method is applied, radio traffic that is in violation of current frequency schedules, said violation being necessary for determining the position of a mobile, is restricted to those access signals sent by the mobile station to a base station chosen to determine the position of the mobile.

An ongoing connection suffers less quality impairment when the mobile station interrupts an attempt to handover to a radio-wise poorer base station than when the handover is continued and the traffic connection is established over the new base station. One reason is that the radio connection is quickly re-established over the earlier base station when handover is interrupted.

Another advantage afforded by the present invention is that the positions of existing non-modified mobile stations can be determined.

The position determining function utilizes existing handover functions. Only moderate changes in the land-based part of the system are required to introduce the inventive position determining method.

Another advantage afforded by the invention is that the time delays measured in the base stations can be used without needing to rounded-up, which enables the position of the mobile station to be determined with great precision.

The invention will now be described in more detail with reference to preferred embodiments thereof and also with reference to the accompanying drawings.

### BRIEF DESCRIPTION OF THE DRAWINGS

Fig. 1 is a principle diagram illustrating the construction of a mobile telephone system in which the inventive positioning determining method can be applied.
Fig. 2 illustrates the TDMA-characteristic division of a carrier wave in time slots and signal bursts and their placement with the GSM system given by way of example.
Figs. 3 and 4 are flow charts illustrating the inventive method. Fig. 5 illustrates the format of information relating to the reason for channel activity, this information being used in the inventive method.
Fig. 6 is a known handover signalling sequence schedule.
Fig. 7 is a signalling sequence schedule for determining the position of a mobile in accordance with the invention.
Fig. 8 is a block schematic illustrating units included in the radio base station and the modifications required by the invention.

### DETAILED DESCRIPTION OF PREFERRED EMBODIMENTS

Before describing the invention, it is thought appropriate to explain a part of the construction of the GSM system and the function on which the invention is based.

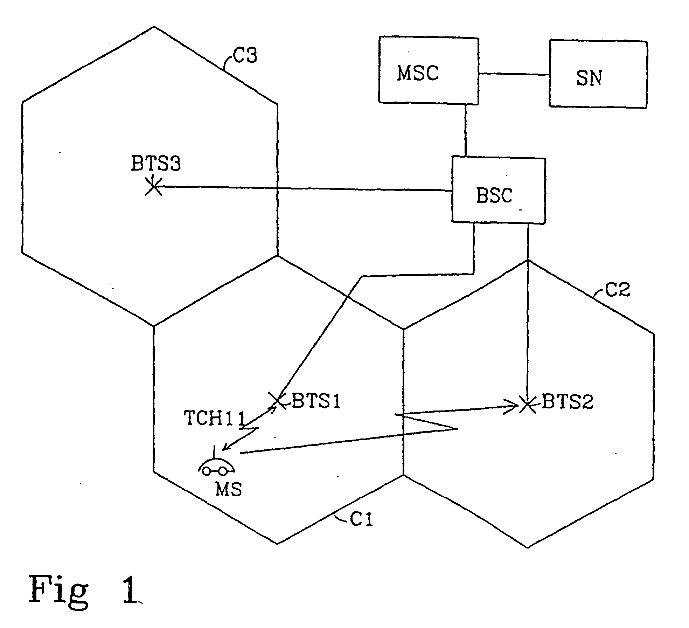

A GSM-type mobile radio system is illustrated schematically in Fig. 1. In the illustrated case, the system includes three base transceiver stations BTS1, BTS2 and BTS3. The base stations are connected to a common base station controller BSC. The number of base transceiver stations connected to the base station controller BSC may be greater than the number shown in Fig. 1.

Each of the base transceiver stations BTS1-BTS3 serves a radio cell, wherein the station BTS1 serves the cell C1, the station BTS2 serves the cell C2, and so on. The base station controller BSC is connected to a mobile telephone switching center MSC.

Further base station controllers may be connected to the switching centre MSC, although this has not been shown in Fig. 1.

A mobile station MS is assumed to be located in the cell C1 and therefore served by the base transceiver station BTS1 over a given radio channel in accordance with the time division multiple access concept (TDMA, carrier frequency, time slot, see the following text).

Although not shown, a mobile localizing register (HLR, VLR) and possibly a service node SN are also connected to the mobile switching center MSC, although the service node may be located outside the public mobile radio network. In this case, the service node SN serves the mobile radio system with certain services. These services are not explained in detail here, because they do not concern the inventive method. The service node SN can, however, be used in conjunction with carrying out the inventive method.

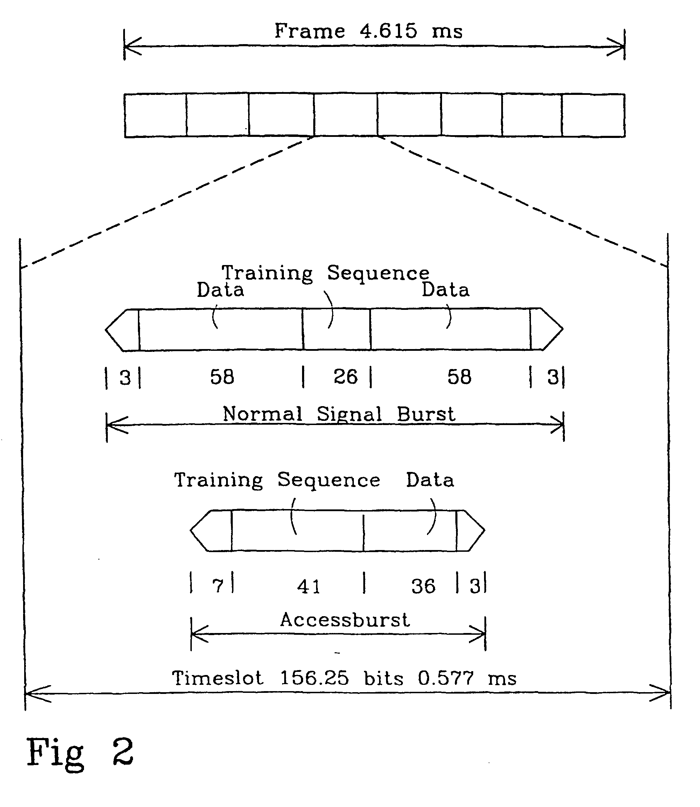

The physical radio interface is divided in accordance with the TDMA structure, meaning that a radio carrier wave is divided into time slots. A frame is comprised of eight mutually sequential time slots. Subsequent to setting-up a connection, a user has a physical channel, consisting of- one time slot per frame, reserved for each uplink and downlink. Fig. 2 illustrates a TDMA frame containing time slots, a normal signal burst and an access burst. The length of a frame, time slot, normal signal burst and access burst is shown in Fig. 2. Also shown is the use of the various bits in the normal signal burst and in the access burst. In the case of an uplink channel, time slot n is time-shifted three slots after time slot n downlink, as observed in the base station. A signal burst from a mobile shall be received in a base station within the reserved time slot. As shown in Fig. 2, a time slot has only 8.25 bit periods, i.e. a 30 µs longer duration than a normal signal burst. Signal bursts from different mobile stations using the same frame must be received at the base station with great accuracy in respect of time, so as not to interfere.

Logic channels are transmitted on the aforedescribed physical channels. A connected mobile station obtains its own dedicated control channels DCCH.

The mobile station MS shown in Fig. 1 has a traffic connection setup on a traffic channel TCH11 having associated dedicated control channels DCCH over a serving base transceiver station BTS1. The mobile station continuously monitors the frequencies on which the broadcast control channels BCCH transmit to neighbouring base stations. In Fig. 1, references BTS2 and BTS3 identify stations that neighbour on the base station BTS1. The mobile station measures the signal strength on the frequency on which BCCH transmits for each neighbouring station. The mobile station also listens to the BS-synchronization channel SCH of those base stations which are the strongest, i.e. base stations whose signal levels exceed the level of ambient noise, in order to identify said stations. The identified neighbouring base stations are included in a list in the mobile station. The mobile station informs the land-based part of the system of the signal strengths of the base stations recorded on the list and their identities up to two times per second. The mobile also records a time reference T1 for each base station that is included on the list, by listening to the base station synchronization channel SCH. The time reference T1 indicates the frame switching time in the base station.

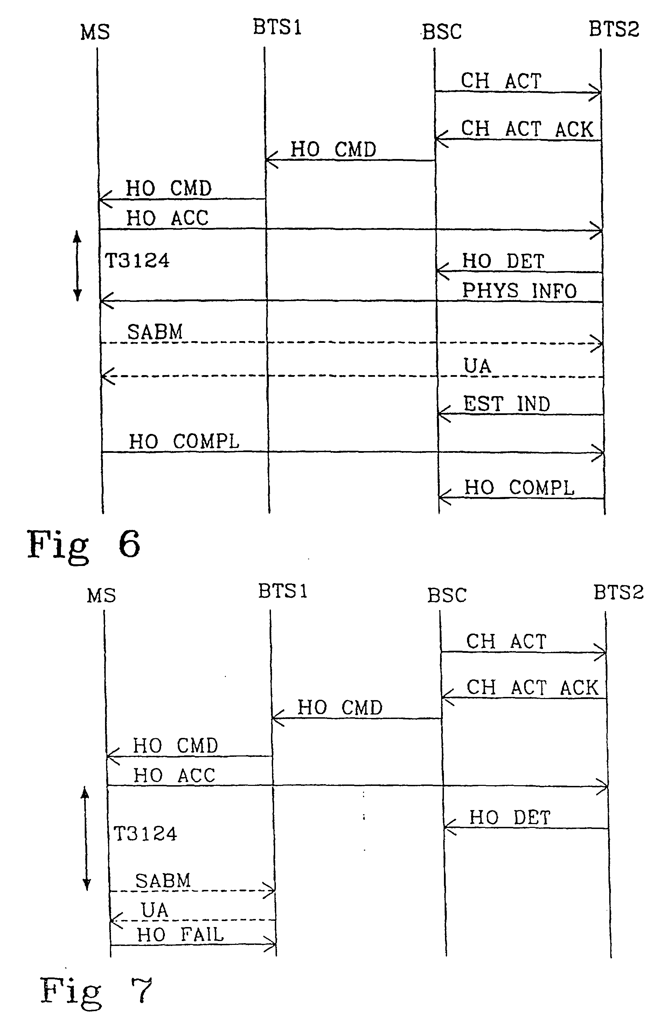

The mobile station informs the base station controller BSC in Fig. 1 of the signal strengths and base station identities of the base stations that are included in the aforedescribed list. The base station controller may decide that the radio connection established with the mobile station MS shall take place over the base station BTS2 instead of the base station BTS1, i.e. the connection shall be handed over to the base station BTS2. The signalling sequences that are exchanged in a known manner between the mobile station MS, the base transceiver stations BTS1 and BTS2 and the base station controller BSC with handover are shown in Fig. 6. The base station controller BSC orders the base station BTS2 to activate a traffic channel with associated control channels for establishing a traffic connection (CHannel ACtivation message). The message includes information as to why the traffic connection is established, in this case handover between non-synchronous radio base stations. The mobile station MS is then ordered to handover to the channels established at the base station BTS2 (handover command). The message includes control data (HO reference value). The mobile station then sends handover access message signals to one of the allocated dedicated control channels DCCH for communication with the base transceiver station BTS2. A clock (T3124) is activated in the mobile station MS when transmitting the first access signal. In order to transmit these access signals correctly in accordance with the time schedule of the base station BTS2, the mobile station MS uses the earlier measured time reference t1 and makes corrections with regard to the time slot used by the channel DCCH, although without correcting for any possible time delay.

When transmitting the access signal, the mobile station MS has no knowledge of the propagation delay and is unable to compensate for the time taken for the signal to reach the base station BTS2. The access signal is therefore received at the base station BTS2 delayed in relation to the internal signal burst arrival schedule of the base station BTS2. The time delay t2 is measured and recorded in the base station BTS2. The recorded time delay corresponds to the wave propagation time of a signal that reciprocates between the base station BTS2 and the mobile station.

If the access signal received in the base station BTS2 contains correct control data, the base station BTS2 proceeds with the handover by sending a response to the mobile station MS (PHYS INFO) and sends to the base station controller a signal informing that handover has been detected, this signal containing the recorded time delay. The remaining handover procedure is of no interest to the invention.

The measured time delay t2 in the base station is divided by two and rounded-up to a bit period, this value being designated "Timing Advance" TA in the GSM specification. When the base transceiver station BTS2 answers the mobile station MS on the access signals, the mobile station MS becomes aware of TA and, in continued signalling, is able to make a time correction also with respect to the propagation delay. The clock T3124 is stopped when the mobile station MS has received confirmation of transmitted access signals from the base station BTS2.

The aforedescribed procedure applies generally to GSM-type mobile systems. The manner in which the position of a mobile station is determined in accordance with the invention will now be described.

If the mobile station whose position shall be determined does not already have a traffic connection established, such a connection is now established.

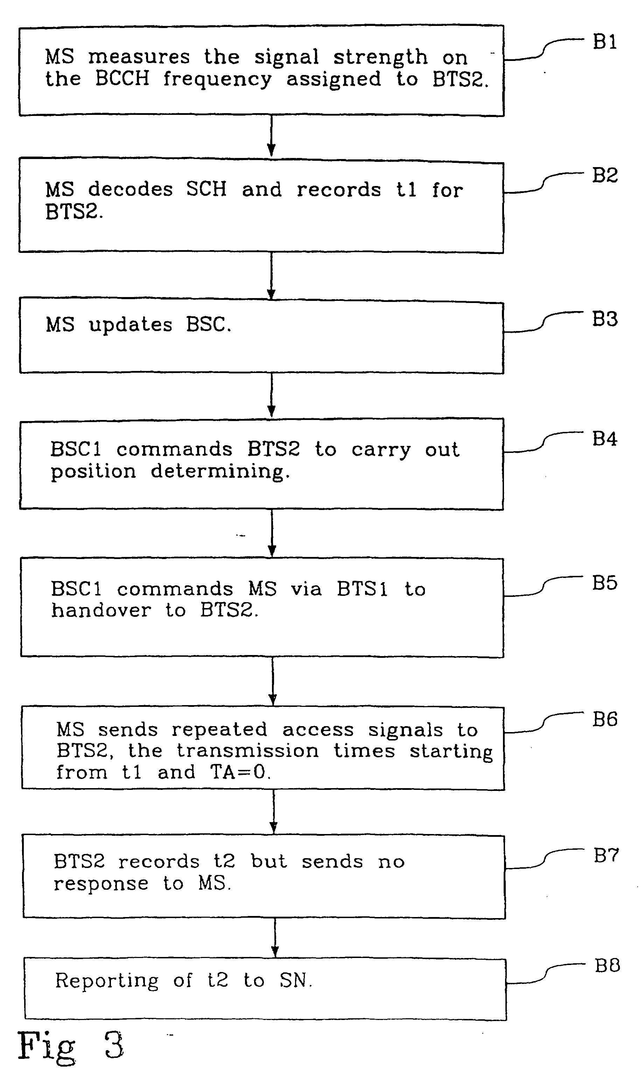

The connected mobile station MS in Fig. 1 repeatedly measures and records the signal strengths of the carrier waves over which neighbouring base stations transmit respective broadcast control channels BCH, in the same way as that described above with respect to all connected mobile stations MS. BTS2 is one- of these neighbouring base transceiver stations. This stage is represented by the first block B1 in the flow sheet of Fig. 3.

The mobile station MS also decodes the synchronization channel SCH of those base stations from which the mobile station measures the strongest signal strengths, and also records a time reference for respective neighbouring base stations. The time reference recorded in respect of base station BTS2 is designated t1. This procedure is also carried out continuously, although less frequently than the rate at which signal strength is measured, although in the same way as that described above with respect to other connected mobile stations MS. This procedure is represented by the second block B2 in Fig. 3.

The mean value formulated power levels of the signal strengths measured by the mobile station in respect of those base stations included in the list are reported to the base station controller up to two times per second. This procedure also applies generally to all connected mobile stations MS in the GSM system. The procedure is symbolized by the third block B3 in Fig. 3.

The feature specific to the invention occurs when the base station BTS2 receives from the base station controller BSC a new type of command concerning mobile position measuring. This command involves the base station BTS2 activating channels for receiving access signals from the mobile station MS. This stage is represented by the fourth block B4 in Fig. 3.

The base station controller BSC then sends to the mobile station via the base station BTS1 a normal handover command ordering the mobile station to handover to the base station BTS2 including information as to which channel shall be used and also control data. This procedure is represented by the fifth block B5 in Fig. 3.

The mobile station MS proceeds in the aforedescribed manner when effecting handover. The mobile station sends a number of access bursts over the dedicated control channel DCCH. The time of transmission of each access burst is determined by the measured time reference t1 for the base station BTS2 and the command number in the frame for the time slot of the dedicated channel. The time delay t2 of the access signal is measured in the base station BTS2 in relation to the arrival time assumed by the base station BTS2 in the event of the mobile station being located in the same location as the base station BTS2. The time delay is measured in the same way as that with handover, although distinct from a complete handover the base station BTS2 inhibits all response to the mobile station MS. The mobile station MS thus receives no response to the access signals. A clock T3124 is activated in the mobile station when sending the first access burst, see Fig. 7. When the time set on this clock has expired in the absence of any confirmation from the base station BTS2, the mobile station MS stops the transmission of access bursts to the base station BTS2. The mobile station MS then reestablishes the earlier connection over the base transceiver station BTS1 in accordance with standard unsuccessful handover procedure. This stage is represented by block B6 in Fig. 3.

The measured time delay t2 is sent from the base station BTS2 to a service node, possibly via other nodes, for measuring data processing and calculating the position of the mobile.

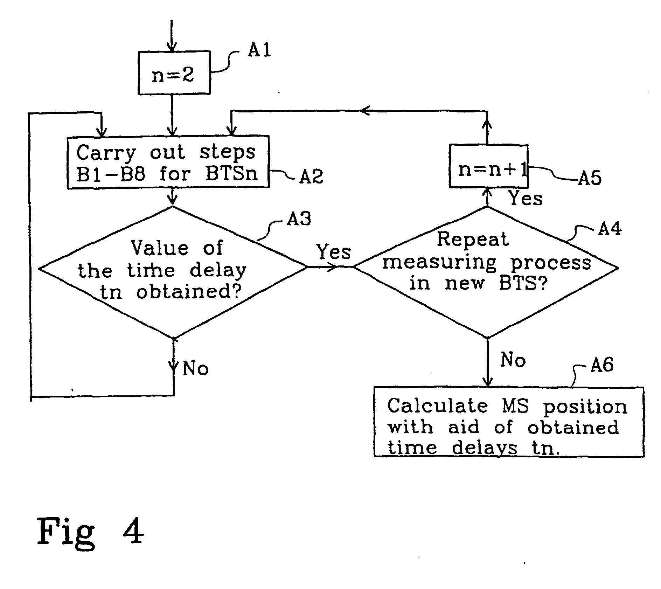

The procedure according to block B1 to B6 is repeated but with the measuring procedure carried out in a base transceiver station other than BTS2, i.e. the same type of access is now made to another base transceiver section, e.g. to BTS3. Fig. 4 illustrates repetition of the Fig. 3 procedure in several base stations, whereafter the position of the mobile station is determined on the basis of the time delays tn measured in the base stations. In the first block A1 in Fig. 4, a count-up number n is set to a start value n=2. All of the stages B1-B8 described in Fig. 3 with reference to the first base station BTS2 are gone through in block A2. A check is then made to ascertain that a time delay t2 has been obtained when measuring in BTS2, block A3. If such a time delay t2 has been obtained, "Yes", in block A3, a decision is then made as to whether measuring shall be repeated in a further base station; see block A4. If it is decided in block 4 to repeat the measuring process, response "Yes", the count-up number is stepped-up one increment, n=n+1 in block A5, whereafter the procedure according to blocks A2 and A3 is repeated for a further base station BTS, therewith obtaining a further time delay. The question is then again raised in block A4 as to whether or not measuring shall be repeated in a further base station. With each decision to repeat measuring in a further base station, it is first checked that there is access to such a further base station that can participate in determining the position of the mobile station. If such a base station is shown to exist, the base station is recorded on the earlier described list sent to the base station controller by the mobile station MS. If access to time delays is available from only one or two base stations, it is decided that the measuring procedure shall be repeated if there is found a further base station that can participate in the measuring process. On the other hand, if time delays have been obtained from at least three base stations, the question of whether or not a further measuring value will increase the accuracy with which the position of the mobile station can be determined shall be taken into account when deciding whether or not the measuring process shall be repeated. Subsequent to the question of further measuring, block A4, being answered in the negative, the position of the mobile station is calculated with the aid of the time delay or time delays obtained from the base stations; see block A6. One or more time delays obtained from other base stations by earlier known measuring methods can also be used in determining the position of the mobile. In order to enable the position to be determined with a high degree of reliability, preferably at least three time delays, measured in different base stations will be available to the service node. Tne mobile position may also be determined with only two time delays, although to a less reliable extent.

The new order received by the base station BTS2 with regard to determining the position of the mobile, block B4 in Fig. 3, may be comprised of a modified order concerning channel activation. This order is sent by the base station controller BSC to the base station BTS2. The current order includes information as to why a new channel shall be set up, e.g. handover of a connection between non-synchronized base stations.

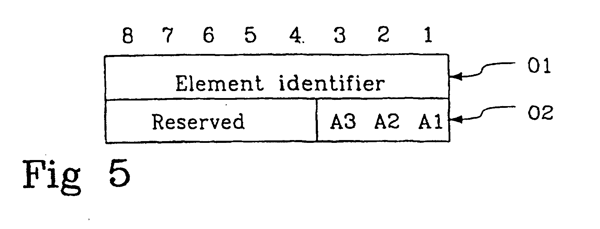

Fig. 5 illustrates a standard format included in the command channel activation for disclosing the reason for the command (GSM 08.58, version 5.0.0., 8.4.1 and 9.3.3). The format includes two fields 01 and 02 each of eight bits, for indicating the reason for channel activation. The other field 02 includes three bits A1, A2 and A3 which are used to indicate cause. The three bits can assume eight symbols, of which five are reserved for specific purposes in accordance with GSM 08.58, version 5.0.0. The remaining three symbols are reserved for future use; one of the symbols may be used to indicate the channel to be activated for position determination.

Fig. 7 illustrates a signalling sequence schedule as it may appear if the channel activation order or command is modified in accordance with the above. The sequence schedule is initially similar to that for handover procedure, with the exception that the channel activation command (CH ACT) has been modified. When in receipt of the access signal from the mobile station MS, the base station BTS2 sends no signal in return, although the base tranceiver station nevertheless sends to the base station controller the message that handover has been detected (HO DET), this message including the time delay t2 registered in the base station BTS2. The time delay t2 is forwarded from the base station controller to the service node.

Transmission of t2 from the base station BTS2 may, alternatively, be effected on receipt of a new command to this effect. The manner in which the measurement value is forwarded is not a subject of the present invention.

The time delays received by the service node are corresponded by geographical distances. If the distance of the mobile station MS is known to three base stations whose positions are also known, the service node is able to calculate the position of the mobile station MS by means of the earlier known triangulation method. In order for the triangulation calculation to be effective, the base stations will preferably be positioned geographically so as to form a triangle approximately similar to an isosceles triangle. Because it is not always likely that the base stations are so conveniently located geographically, it is beneficial to include more than three base stations in the measuring procedure. Time dispersion and rounding-off of the measuring values also enables the position of the mobile to be determined more accurately when more than three base stations are included in the measuring procedure.

It is possible that the mobile station is positioned in a location in which there is no access to at least three base stations for determining the position of the mobile. The position of the mobile can nevertheless be determined, although with less accuracy, even when there is access to solely two time delays obtained from two base stations. One time delay obtained from one base station corresponds to a given distance from the base station and this distance can be drawn on a map as a circle on which the mobile station is located. Two time delays from two base stations are corresponded by two circles. The position of the mobile station is corresponded by one of the two points on which these two circles mutually intersect. The position determined is unreliable by virtue of the two intersection points. In many instances, one of the intersection points will be the more probable position of the mobile station. This is the case when, for instance, one intersection point corresponds to a highway whereas the other corresponds to a wooded area.

The serving base station BTS1 always has a current value of the time delay reciprocating between the base station and the mobile station MS. This time delay can also be used together with time delays measured in accordance with the inventive method by the service node in determining the position of the mobile station.

It may happen that a complete handover of the radio connection to a new base station is made after initiating the mobile position determining procedure, for radio or traffic reasons. In such a case, the propagation delay measured in the new base station and the propagation delay measured in the previous serving base station may be used by the service node together with a time delay that has been obtained by the inventive measuring method for determining the position of the mobile station.

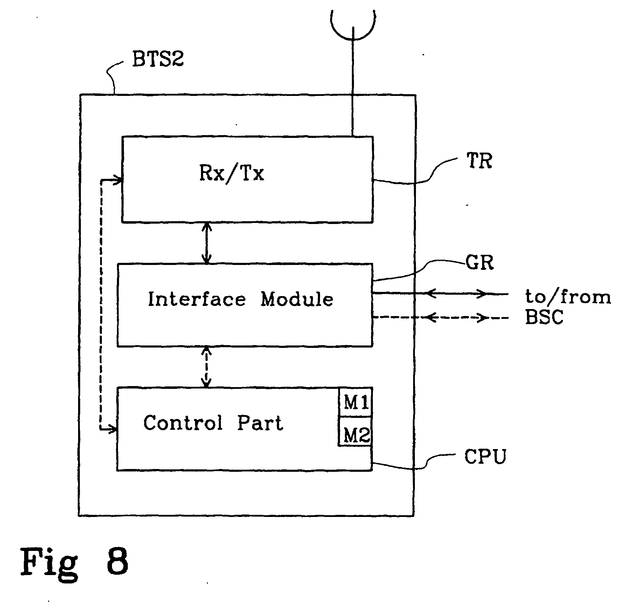

A base station must be modified in order to interpret a command concerning mobile position determination, and proceed in the correct manner. Fig. 8 is a block schematic which illustrates the units included in the modified base transceiver station BTS2. The base station is represented by three separate blocks, wherein the first block designated TR is the radio transceiver part of the base station. The second block designated GR is an interface to the base station controller, e.g. the Abis interface in GSM. The third block designated CPU represents a central processor and memory unit capable of handling the base station control functions. The CPU block has data connections with the other two blocks.

The block GR is a mediator of all communications to and from the base station controller BSC. This includes data between BSC and BTS, both speech and data between BSC and the mobile station, MS. GR is connected with TR for speech and data passed between BSC and MS.

The central processor CPU includes a decoder unit which decodes the data arriving at BTS from MS and BSC and controls the functions in the other blocks on the basis of the commands received from MS and BSC. The processor CPU also initiates signalling to BSC, said signals passing via GR.

The modified base station BTS2 differs from a typical base station by virtue of the control block having a memory space M1 in which a command relating to position measuring is stored. A similar modification shall be made in base stations BTS3 used for mobile position determination. The commands received from the base station controller BSC are compared with the aforesaid stored command in order to ascertain that the incoming command is a position determining command.

It is also necessary for the base station BTS2 to be able to carry out the inventive method. It is therewith possible to commence with the same procedure as that applied in a typical handover, although in this case it is necessary to ascertain whether or not the stages to be excluded in a position determining procedure shall be followed. This check is carried out with the aid of one or more flags which are inserted when the mobile position determining command is received. To this end, the processor CPU of the base station BTS2 is provided with a further memory space M2 for storing said one or more flags.

When a mobile position determining order or command is identified, the modified base station BTS2 can commence the same program loop as with a typical handover in order to perform the same measurement of access bursts obtained from the mobile station MS as in a standard handover. Distinct from a standard handover, however, the base station BTS2 shall inhibit confirmation of the received access burst by inserting a flag in the memory space of the central processor.

As an alternative to commencing the procedure applied in a typical handover, a separate program loop may be used for determining the position of the mobile. It is necessary in this case to provide the control part of the base-station with memory space (not shown) in which the loop specific to the position determining process can be stored.

All of the base stations, BTS2-BTS3 in Fig. 1, that are to determine the position of a mobile in accordance with the invention must be modified in the same- way as the base station BTS2. The original serving base station BTS1, however, need not be modified, although there is nothing to prevent this.

An ordinary radio base transceiver station in the GSM-system can serve mobile stations on the maximum distance of thirty-five km. The GSM-system also specifies a radio base transceiver station configured to serve mobile stations on an extended distance of maximum seventy km.

The patent application US 08 617,406 teaches implementation of handover when distances between the mobile station and the radio base transceiver station is more than thirty-five km. The teaching of the application US 08 617,406 is also applicable for the present invention when handover is performed for the purpose of determining the position of the mobile station and the distance is more then thirty-five km between the mobile station and the radio base transceiver station.

It will be understood that the invention is not restricted to the aforedescribed and illustrated exemplifying embodiments thereof including only one base station controller and one mobile switching centre, and that the invention can be applied with several base station controllers and mobile switching centres within the scope of the following Claims.

## Claims

1. A method of determining the position of a mobile station (MS) in a TDMA-type mobile radio system which includes at least one base station controller (BSC) with associated first plurality of radio base stations (BTS1-BTS3) and at least one mobile radio switching center (MSC), comprising the steps of:
a) establishing a radio link (TCH11) between the mobile station (MS) and a first (BTS1) radio base station among said first plurality of radio base stations;
b) ordering (B5) the mobile station (MS) to handover the radio link (TCH11) from said first radio base station (BTS1) to a second (BTS2) of said first plurality of base stations;
c) initiating (B6) the handover by sending an access signal from the mobile station to said second base station(BTS2);
d) measuring (B7) the propagation delay of said access signal in said second base station (BTS2); **characterized by**
e) inhibiting (B7) transmission of a confirmation on the receipt of said access signal to be sent from said second base station to the mobile station; and
f) repeating steps b)-e) with respect to at least a third base station among said first plurality of base stations and using the propagation delays measured in the second and third base stations for calculating the position of the mobile station.

2. A method of determining the position of a mobile station (MS) in a TDMA-type mobile radio system which includes at least one base station controller (BSC) with associated first plurality of radio base stations (BTS1-BTS3) and at least one mobile radio switching center (MSC), comprising the steps of:
a) measuring the propagation delay between the mobile station (MS) and a first radio base station (BTS1) among said first plurality of radio base station by means of random access signal sent by the mobile station on a random access channel and received by said first radio base station (BTS1) and establishing a radio link in the first radio base station (BTS1), **characterized by** carrying out the steps b)-e) of claim 1, wherein the propagation delays from the first and second radio base stations (BTS1, BTS2) are used for determining the position of the mobile station.

3. A method according to Claim 1, wherein the mobile station while being connected to the first radio base station (BTS1) evaluates the signal strengths of a second plurality of radio base stations and selects said second radio base station from said second plurality of radio base stations.

4. A method according to Claim 1, **characterized in that** the second base station (BTS2) receives a mobile station position determining command which is comprised of a modified version of the channel activity command, whereupon the base station inhibits confirmation of the receipt of the access signal from the mobile station.

5. A method according to Claim 1 or 2, **characterized in that** at least three time delays are obtained for the purpose of calculating the position of the mobile station.

6. A method according to Claim 1 or 2, **characterized in that** the mobile radio system is a GSM-system.

7. A radio base transceiver station (BTS2) for use in a cellular radio communication system, comprising:
means (GR) for connecting to a base station controller (BSC),
a radio transceiver (TR) for radio communication with a mobile station (MS), and wherein the radio base station is arranged for measuring the propagation delay on an access signal sent to the radio base station from a mobile station during a handover attempt, **characterized by**
means being arranged for inhibiting transmission to the mobile station (MS) of a confirmation of the access signal, when the purpose of the handover attempt is positioning of the mobile station.

8. The radio base transceiver station (BTS) according to claim 7, wherein the base station has means for receiving and identifying a mobile station positioning command and inhibiting said confirmation when the positioning command has been identified.

9. The radio base transceiver station (BTS) according to Claim 7 or 8, wherein said inhibiting means comprises computer program executing means (CPU).

10. The radio base transceiver station (BTS) of claim 7 complying with GSM standard.

## Patentansprüche

1. Verfahren zum Bestimmen der Position einer Mobilstation (MS) in einem TDMA-Typ Mobilfunksystem, welches wenigstens einen Basisstations-Controller (BSC) mit einer zugehörigen ersten Vielzahl von Funkbasisstationen (BTS1-BTS3) und wenigstens ein Mobilfunk-Vermittlungszentrum (MSC) einschließt, umfassend die folgenden Schritte:
a) Herstellen einer Funkstrecke (TCH11) zwischen der Mobilstation (MS) und einer ersten (BTS1) Funkbasisstation von der ersten Vielzahl von Funkbasisstationen;
b) Auffordern (B5) der Mobilstation (MS) die Funkstrecke (TCH11) von der ersten Funkbasisstation (BTS1) an eine zweite (BTS2) der ersten Vielzahl von Basisstationen zu übergeben;
c) Initiieren (B6) der Übergabe durch Senden eines Zugriffssignals von der Mobilstation an die zweite Basisstation (BTS2);
d) Messen (B7) der Ausbreitungsverzögerung des Zugriffssignals in der zweiten Basisstation (BTS2);
**gekennzeichnet durch** die folgenden Schritte:
e) Verhindern (B7) einer Übertragung einer Bestätigung über den Empfang des Zugriffssignals, die von der zweiten Basisstation an die Mobilstation gesendet werden soll; und
f) Wiederholen der Schritte b) - e) in Bezug auf wenigstens eine dritte Basisstation von der ersten Vielzahl von Basisstationen und verwenden der Ausbreitungsverzögerungen, die in der zweiten und dritten Basisstation gemessen werden, zum Berechnen der Position der Mobilstation.

2. Verfahren zum Bestimmen der Position einer Mobilstation (MS) in einem TDMA-Typ Mobilfunksystem, welches wenigstens einen Basisstations-Controller (BSC) mit einer zugehörigen ersten Vielzahl von Funkbasisstationen (BTS1-BTS3) und wenigstens ein Mobilfunk-Vermittlungszentrum (MSC) einschließt, umfassend die folgenden Schritte:
a) Messen der Ausbreitungsverzögerung zwischen der Mobilstation (MS) und einer ersten Funkbasisstation (BTS1) von der ersten Vielzahl von Funkbasisstationen mit Hilfe eines Zufallszugriffssignals, das von der Mobilstation auf einem Zufallszugriffskanal gesendet und von der ersten Funkbasisstation (BTS1) empfangen wird und Herstellen einer Funkstrecke in der ersten Funkbasisstation (BTS1),
**gekennzeichnet durch** ein Ausführen der Schritte b) - e) nach Anspruch 1, wobei die Ausbreitungsverzögerungen von der ersten und zweiten Funkbasisstation (BTS1, BTS2) zum Bestimmen der Position der Mobilstation verwendet werden.

3. Verfahren nach Anspruch 1, wobei die Mobilstation, während sie mit der ersten Funkbasisstation (BTS1) verbunden ist, die Signalstärken einer zweiten Vielzahl von Funkbasisstationen auswertet und die zweite Funkbasisstation aus der zweiten Vielzahl von Funkbasisstationen auswählt.

4. Verfahren nach Anspruch 1, **dadurch gekennzeichnet, dass** die zweite Basisstation (BTS2) einen Mobilstations-Positionsbestimmungsbefehl empfängt, der aus einer modifizierten Version des Kanalaktivitätsbefehls gebildet ist, woraufhin die Basisstation eine Bestätigung des Empfangs des Zugriffssignals von der Mobilstation verhindert.

5. Verfahren nach Anspruch 1 oder 2, **dadurch gekennzeichnet, dass** wenigstens drei Zeitverzögerungen für den Zweck einer Berechnung der Position der Mobilstation ermittelt werden.

6. Verfahren nach Anspruch 1 oder 2, **dadurch gekennzeichnet, dass** das Mobilfunksystem ein GSM-System ist.

7. Funkbasistransceiver-Station (BTS2) zur Verwendung in einem zellularen Funkkommunikationssystem, umfassend:
eine Einrichtung (GR) zur Verbindung mit einem Basisstations-Controller (BSC);
einen Funktransceiver (TR) für eine Funkkommunikation mit einer Mobilstation (MS), und wobei die Funkbasisstation angeordnet ist, um die Ausbreitungsverzögerung auf einem Zugriffsignal zu messen, das an die Funkbasisstation von einer Mobilstation während eines Übergabeversuchs gesendet wird,
**gekennzeichnet durch**
eine Einrichtung, die angeordnet ist, um eine Übertragung einer Bestätigung des Zugriffssignals an die Mobilstation (MS) zu verhindern, wenn der Zweck des Übergabeversuchs eine Positionierung der Mobilstation ist.

8. Funkbasistransceiver-Station (BTS) nach Anspruch 7, wobei die Basisstation eine Einrichtung zum Empfangen und Identifizieren eines Mobilstationspositionierungsbefehl und zum Verhindern der Bestätigung, wenn der Positionierungsbefehl identifiziert worden ist, aufweist.

9. Funkbasistransceiver-Station (BTS) nach Anspruch 7 oder 8, wobei die Verhinderungseinrichtung eine Computerprogramm-Ausführungseinrichtung (CPU) umfasst.

10. Funkbasistransceiver-Station (BTS) nach Anspruch 7, nach dem GSM Standard.

## Revendications

1. Procédé de détermination de la position d'une station mobile (MS) dans un système radio mobile du type TDMA qui inclut au moins un contrôleur de station de base (BSC) auquel sont associées une première pluralité de stations de base radio (BTS1-BTS3) et au moins un centre de commutation radio mobile (MSC), comprenant les étapes de:
a) établissement d'une liaison radio (TCH11) entre la station mobile (MS) et une première (BTS1) station de base radio parmi ladite pluralité de stations de base radio;
b) action consistant à ordonner (B5) à la station mobile (MS) de transférer la liaison radio (TCH11) depuis ladite première station de base radio (BTS1) sur une seconde (BTS2) de ladite première pluralité de stations de base;
c) initiation (B6) du transfert en envoyant un signal d'accès depuis la station mobile à ladite seconde station de base (BTS2);
d) mesure (B7) du retard de propagation dudit signal d'accès dans ladite seconde station de base (BTS2),
**caractérisé par**:
e) l'inhibition (B7) de la transmission d'une confirmation concernant la réception dudit signal d'accès à envoyer depuis ladite seconde station de base sur la station mobile; et
f) répétition des étapes b) à e) en relation avec au moins une troisième station de base parmi la première pluralité de stations de base et utilisation des retards de propagation qui sont mesurés dans les seconde et troisième stations de base pour calculer la position de la station mobile.

2. Procédé de détermination de la position d'une station mobile (MS) dans un système radio mobile du type TDMA qui inclut au moins un contrôleur de station de base (BSC) auquel sont associées une première pluralité de stations de base radio (BTS1-BTS3) et au moins un centre de commutation radio mobile (MSC), comprenant les étapes de:
a) mesure du retard de propagation entre la station mobile (MS) et une première station de base radio (BTS1) parmi ladite première pluralité de stations de base radio au moyen d'un signal d'accès aléatoire qui est envoyé par la station mobile sur un canal d'accès aléatoire et qui est reçu par ladite première station de base radio (BTS1) et établissement d'une liaison radio dans la première station de base radio (BTS1),
**caractérisé par** la mise en oeuvre des étapes b) à e) de la revendication 1, dans lequel les retards de propagation depuis les première et seconde stations de base radio (BTS1, BTS2) sont utilisés pour déterminer la position de la station mobile.

3. Procédé selon la revendication 1, dans lequel la station mobile, tandis qu'elle est connectée à la première station de base radio (BTS1), évalue les intensités de signal d'une seconde pluralité de stations de base radio et sélectionne ladite seconde station de base radio parmi ladite seconde pluralité de stations de base.

4. Procédé selon la revendication 1, **caractérisé en ce que** la seconde station de base (BTS2) reçoit une commande de détermination de position de station mobile qui comprend une version modifiée de la commande d'activité de canal, suite à quoi la station de base inhibe la confirmation de la réception du signal d'accès depuis la station mobile.

5. Procédé selon la revendication 1 ou 2, **caractérisé en ce qu'**au moins trois retards temporels sont obtenus dans le but de calculer la position de la station mobile.

6. Procédé selon la revendication 1 ou 2, **caractérisé en ce que** le système radio mobile est un système GSM.

7. Station d'émetteur-récepteur de base radio (BTS2) pour une utilisation dans un système de communication radio cellulaire, comprenant:
un moyen (GR) pour une connexion à un contrôleur de station de base (BSC);
un émetteur-récepteur radio (TR) pour une communication radio avec une station mobile (MS) et dans lequel la station de base radio est agencée pour mesurer le retard de propagation sur un signal d'accès qui est envoyé sur la station de base radio depuis une station mobile pendant une tentative de transfert;
**caractérisée par**:
un moyen qui est agencé pour inhiber une transmission sur la station mobile (MS) d'une confirmation du signal d'accès, lorsque le but de la tentative de transfert est le positionnement de la station mobile.

8. Station d'émetteur-récepteur de base radio (BTS) selon la revendication 7, dans laquelle la station de base comprend un moyen pour recevoir et identifier une commande de positionnement de station mobile et pour inhiber ladite confirmation lorsque la commande de positionnement a été identifiée.

9. Station d'émetteur-récepteur de base radio (BTS) selon la revendication 7 ou 8, dans laquelle ledit moyen d'inhibition comprend un moyen d'exécution de programme d'ordinateur (CPU).

10. Station d'émetteur-récepteur de base radio (BTS) selon la revendication 7, compatible avec un standard GSM.
